# EUROPEAN PATENT APPLICATION

(11) **EP 2 353 849 A2**
(43) Date of publication of application: **10.08.2011**
(21) Application number: 10191867.0
(22) Date of filing: 19.11.2010
(51) Int. Cl.: B29D 11/00

(54) **Preform for molding an optical element and optical element molding method**

(30) Priority: 10.02.2010 JP 2010027686
(71) Applicant: Fujifilm Corporation, Minato-ku Tokyo (JP)
(72) Inventor: Miyamoto, Haruhiko, Kanagawa (JP); Yoshioka, Masato, Kanagawa (JP); Fujiwara, Takayuki, Kanagawa (JP)
(74) Representative: HOFFMANN EITLE

(57) **Abstract**

A preform (10) for molding an optical element includes an element body forming portion for forming an element body having optical surfaces and a flange forming portion provided in a periphery of the element body forming portion, and when the preform is deformed through heating and compressing inside a space enclosed by an upper die and a lower die and a barrel die (26) of a molding device, the outer periphery of the flange forming portion is formed to have abutment portions (17) that abut on the inner surface of the barrel die and non-abutment portions (18) that do not abut on the inner surface of the barrel die.

## Description

### BACKGROUND OF INVENTION

The present invention relates to a preform for molding an optical element, which is an intermediate in an optical element molding method whereby an optical element is molded by compression molding, and a method of molding an optical element using the preform.

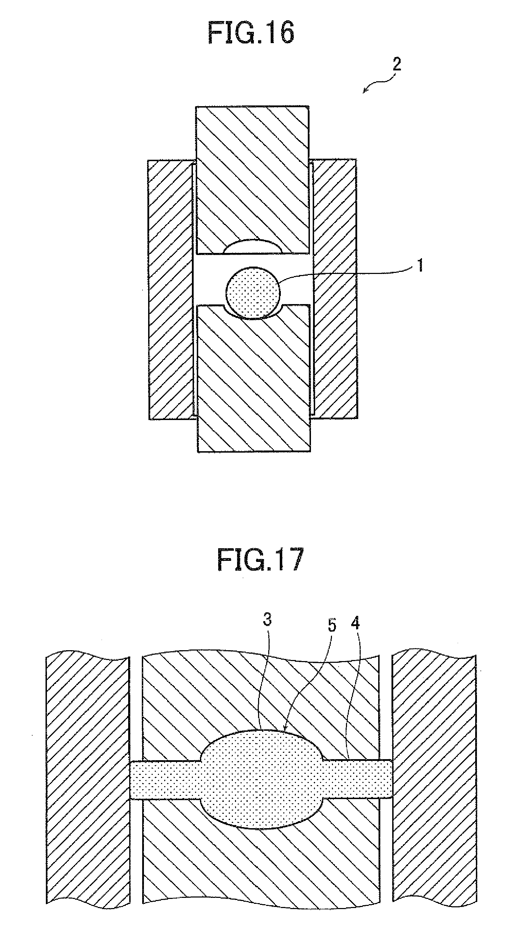

JP 1993-177725 A, for example, describes a conventional method of producing an optical element such as a lens and a prism, used in optical instruments. As illustrated in Fig. 16, upon producing a preform 1 from an optical material such as plastic or glass, the preform 1 undergoes heating and compression molding inside a mold 2 to produce, for example, an optical element 5 as illustrated in Fig. 17 having an optical element body 3 and a flange 4 supporting the optical element body 3.

According to conventional methods, however, when the volume of the preform 1 was larger than the volume of an optical element to be produced, the heating and compressing process resulted in the optical element having an increased thickness, thus lowering the product quality. When, on the other hand, the volume of the preform 1 is smaller than the volume of an optical element to be produced, or when the preform 1 was positioned out of alignment in the mold 2, the edge portion could not be properly molded in the heating and compressing process, and thus the molded optical element could not be positioned accurately in a device such as a camera.

Recent years have been seeing a growth in demand for lenses used in cameras having reduced dimensions such as, in particular, digital cameras incorporated in mobile phones and cameras used in medical equipment. These lenses used in mobile phones, medical equipment and the like are extremely small and are required to meet high optical accuracy requirements.

Therefore, optical elements of lowered quality such that they do not permit accurate positioning in devices cause defects of material importance in optical accuracy.

In particular, lenses incorporated in extremely small cameras, etc. are often used in combination. Thus, when some of such lenses have increased thicknesses at their optical element bodies or when some of such lenses have burrs at their rim or when their rim is not fully formed, the reference surfaces for positioning the lenses shift, making it difficult to align the optical paths of the lenses and to match their focal points.

JP 2008-88006 A and JP 2006-199519 A describe a method of eliminating the problem of such lenses of low quality being molded. JP 2008-88006 A describes maintaining the mass accuracy of a glass preform in order to eliminate problems of thickening of lenses, formation of burrs, and insufficient formation of the rim. JP 2006-199519 A describes using a method of achieving sufficient centering of a preform regardless of a shape of a mold when disposing the preform in the mold.

### SUMMARY OF INVENTION

These methods described in JP 2008-88006 A and JP 2006-199519 A had drawbacks that the method of producing a preform and the composition of a mold proposed therein were complicated and required a great deal of work and costs.

To overcome the above problems associated with the prior art, the present invention provides a preform for molding an optical element permitting easy and low-cost molding of a high quality optical element and a method of manufacturing such a preform.

A preform for molding an optical element according to the present invention comprises: an element body forming portion for forming an element body including optical surfaces; and a flange forming portion provided in a periphery of the element body forming portion, wherein when the preform is deformed through heating and compressing inside a space enclosed by an upper die, a lower die and a barrel die, an outer periphery of the flange forming portion is formed to have abutment portions that abut on the inner surface of the barrel die and non-abutment portions that do not abut on the inner surface of the barrel die.

A method of molding an optical element according to the present invention comprises the steps of: disposing the above-described preform for molding an optical element in a space enclosed by an upper die, a lower die, and a barrel die; and deforming the preform for molding an optical element through heating and compressing so that a periphery of the flange forming portion has abutment portions that abut on the inner surface of the barrel die and non-abutment portions that do not abut on the inner surface of the barrel die.

### BRIEF DESCRIPTION OF DRAWINGS

Fig. 1 is a view of a preform for molding an optical element according to an embodiment of the invention.
Fig. 2 is a whole view of a preform compressing molding device used for compression molding the preform according to the embodiment of the invention.
Figs. 3 and 4 are a top plan view in cross section and a side view of the preform according to the embodiment of the invention before compression molding, respectively.
Fig. 5A is a side sectional view of the preform according to the embodiment of the invention upon completion of compression molding and Fig. 5B is a cross sectional view taken along a line A-A' in Fig, 5A.
Fig. 6 is a top plan view of an optical element produced by compressing-molding the preform according to the embodiment of the invention.
Fig. 7 is an enlarged side view of the rim portion of the optical element produced by compressing-molding the preform according to the embodiment of the invention.
Figs. 8A, 8B and 8C are cross-sectional top plan views illustrating the preform according to the embodiment of the invention, with the center of the preform out of alignment with the centers of the molding surfaces of an upper die and a lower die before compression molding, during compression molding, and upon completion of compression molding, respectively.
Fig. 9A is a top plan view of a preform according to a first modification of the embodiment of the invention and Fig. 9B is a top plan view of a molded product thereof.
Fig. 10A is a top plan view of a preform according to a second modification of the embodiment of the invention and Fig. 10B is a top plan view of a molded product thereof.
Fig. 11A is a top plan view of a preform according to a third modification of the embodiment of the invention and Fig. 11B is a top plan view of a molded product thereof.
Fig. 12A is a top plan view of a preform according to a fourth modification of the embodiment of the invention and Fig. 12B is a top plan view of a molded product thereof.
Fig. 13A is a top plan view of a preform according to a fifth modification of the embodiment of the invention and Fig. 13B is a top plan view of a molded product thereof.
Fig. 14 is a view of a preform according to another embodiment of the invention such that a flange forming portion has an annular rim forming portion.
Fig. 15 is a cross-sectional side view of the preform of Fig. 14 upon completion of compression molding.
Fig. 16 is a cross-sectional side view of a conventional preform for molding an optical element as disposed in a preform compression molding device.
Fig. 17 is an enlarged cross-sectional side view of the conventional preform upon completion of compression molding.

### DETAILED DESCRIPTION OF INVENTION

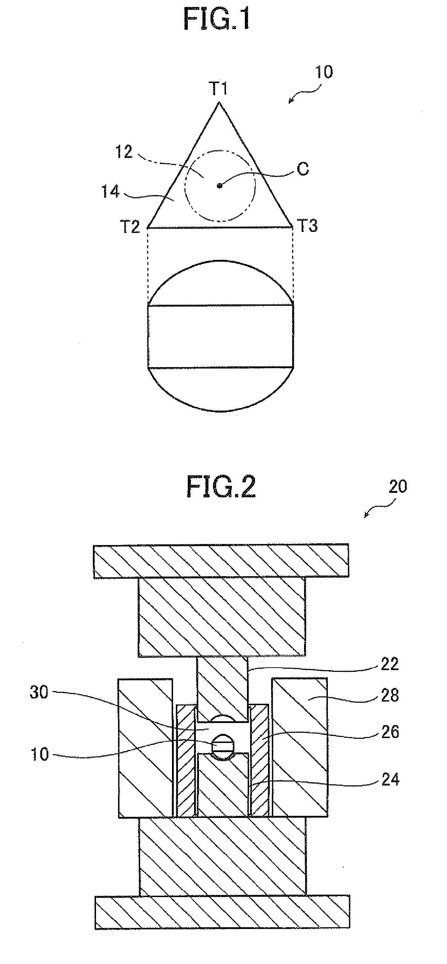

Fig. 1 is a view illustrating a preform 10 for molding an optical element according to an embodiment of the invention.

The preform 10 substantially has the shape of a triangular prism having top and bottom convex faces each with three vertices T1 to T3. The preform 10 comprises an element body forming portion 12 located in a central portion containing a central axis C of the triangular prism and a flange forming portion 14 located around the element body forming portion 12 and containing three corner portions of the triangular prism corresponding to the three vertices T1 to T3 of the triangle.

The element body forming portion 12 and the flange forming portion 14 are imaginary divisions corresponding to the portions of the preform 10 as molded into an optical element, and thus the boundaries thereof need not be clearly determined.

The material of the preform 10 for molding an optical element is not specifically limited and may be any of various optical materials depending on the optical element to be molded such as thermoplastic resins and glass.

Next, the method of molding the preform 10 into an optical element will be described.

To mold the preform 10, a preform compression molding device 20 as illustrated in Fig. 2 is used. The molding device 20 comprises a lower die 24 which is fixedly provided, and an upper die 22 which can move up and down with respect to the lower die 24. Around the lower die 24 and the upper die 22 is provided a barrel die 26 in such a manner as to surround the lower die 24 and the upper die 22. The barrel die 26 is in turn surrounded by a cylindrical spacer 28 to limit the displacement of the upper die 22.

First, the preform 10 illustrated in Fig. 1 is disposed in a cavity 30 defined by the molding surfaces of the upper die 22 and the lower die 24 and the inner surface of the barrel die 26.

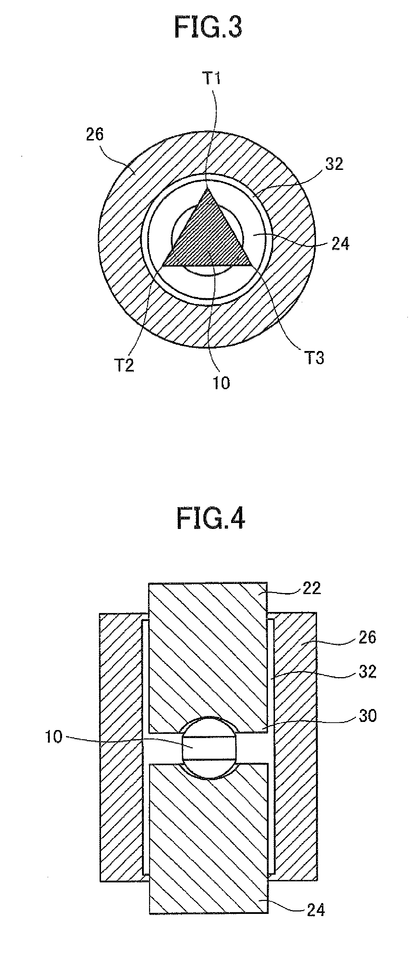

As illustrated in Fig. 3, the preform 10 is disposed so that the top and bottom faces having a triangular convex face are positioned substantially centrally of and opposite to the molding surfaces of the upper die 22 and the lower die 24, respectively, and heated by a heater (not shown) provided in the molding device 20.

When the preform 10 has been sufficiently heated to permit deformation, the upper die 22 is lowered toward the lower die 24 as shown in Fig. 4 to achieve compression molding of the preform 10, imparting to the preform 10 a shape defined by the molding surfaces of the upper die 22 and the lower die 24.

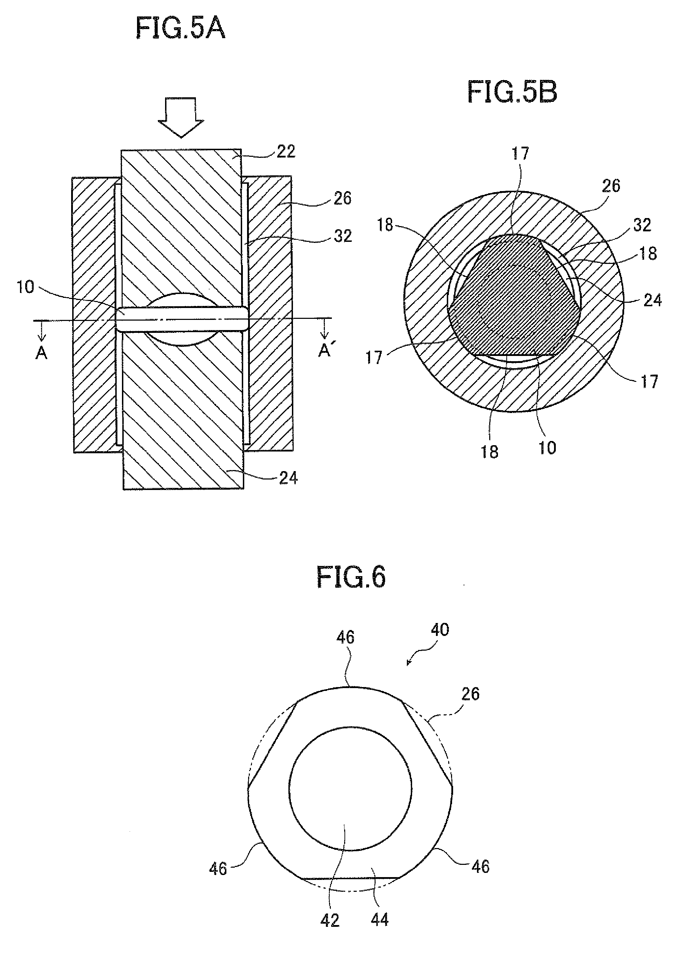

The height of the spacer 28 is previously determined according to the shape and thickness of the optical element to be molded. The upper die 22 is lowered until it abuts on the spacer 28 to complete deformation of the preform 10 by compression as illustrated in Fig. 5A and achieve shaping of the optical element.

The preform 10 has a predetermined volume smaller than the inner volume which the cavity 30 has at the time of completion of compression and, upon completion of compression and deformation, formed in the periphery of the preform 10 are three abutment portions 17 in contact with the inner surface of the barrel die 26 and three non-abutment portions 18 out of contact with the inner surface of the barrel die 26 as illustrated in Fig. 5B.

After completion of compression and deformation of the preform 10, the deformed preform 10 is cooled to produce an optical element. The upper die 22 is lifted up to open the dies and permit retrieval of the optical element.

Fig. 6 illustrates an optical element 40 thus produced. The optical element 40 comprises an element body 42 and an annular flange 44 around the element body 42 for supporting the element body 42. The flange 44 has three rim portions 46 in its periphery corresponding to the abutment portions 17 of the preform 10 formed upon completion of the compression and deformation.

To install the optical element 40 in an optical device such as a camera, the element body 42 is supported by the flange 44 and positioned by the three rim portions 46 provided in the periphery of the flange 44.

Next, it will be described in detail how the compression molding is achieved focusing on the molding surfaces of the upper die 22 and the lower die 24 and the inner surface of the barrel die 26.

The preform compression molding device 20, composed of several different die members, necessarily has a clearance 32 between neighboring die members, particularly between the upper die 22 and the lower die 24 and the barrel die 26.

After the preform 10 has been sufficiently heated to permit deformation, the upper die 22 moves toward the lower die 24.

As the upper die 22 moves, the preform 10 is compressed by the molding surfaces of the upper die 22 and the lower die 24. The compression starts to shape optical surfaces as the preform 10 grows thinner and deforms into the shape defined by the molding surfaces of the upper die 22 and the lower die 24, while the top and bottom triangular faces of the perform 10 grow larger in area in radial directions toward the barrel die 26.

The vertices T1 to T3 of the triangle abut on the barrel die 26 earlier than the other portions of the preform 10.

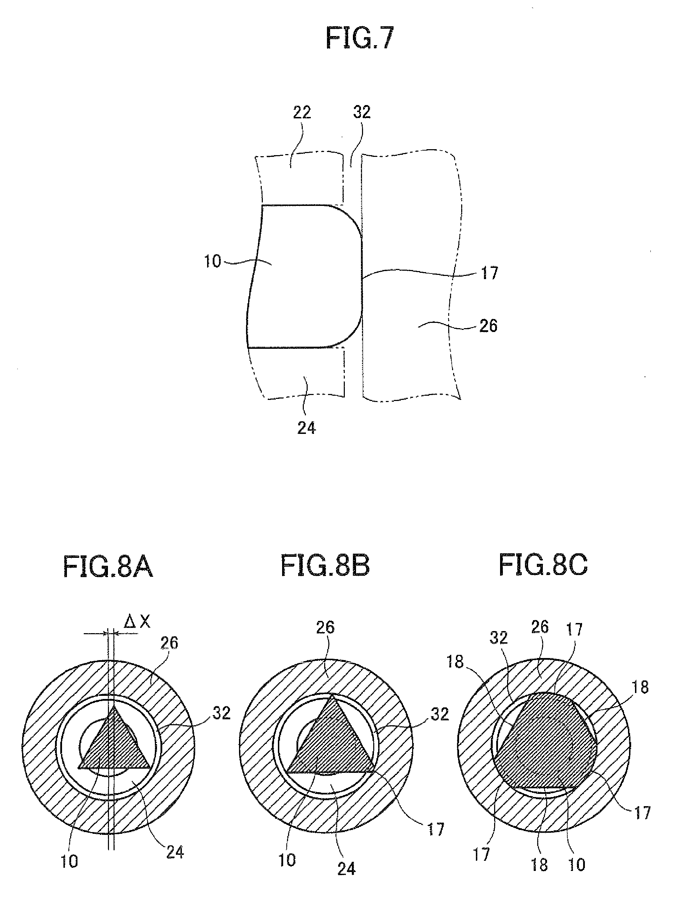

As the preform 10 expands toward the barrel die 26, the portions containing the vertices T1 to T3 deform into the shape defined by the inner surface of the barrel die 26, gradually increasing the area of contact with the inner surface of the barrel die 26. However, because the preform 10 has a preset volume that is smaller than the inner volume which the cavity 30 has upon completion of compression as described above, the whole outer periphery of the preform 10 does not come into contact with the inner surface of the barrel die 26, leaving the above-mentioned non-abutment portions 18 out of contact. Thus, as illustrated in Fig. 7, the abutment portions 17 of the preform 10 properly come into contact with the inner surface of the barrel die 26 without entering the clearance 32 between the barrel die 26 and the upper die 22 or the lower die 24.

Thus, the three rim portions 46 are formed as the three portions containing the vertices T1 to T3, which are located closer to the barrel die 26, abut on the inner surface of the barrel die 26 earlier than the other portions of the preform 10.

Even when the amount of the preform 10 varies and is slightly smaller than specified, the portions of the triangle containing the vertices T1 to T3 first abut on the inner surface of the barrel die 26 to form the rim portions 46, whereas even when the amount of the preform 10 is slightly larger than specified, the non-abutment portions 18 only allow the spaces defined by the non-abutment portions 18 and the barrel die 26 to decrease upon completion of compression molding while preventing the optical element 40 from being produced with an increased thickness than specified or the material of the preform 10 from projecting into the clearance 32 between the barrel die 26 and the upper die 22 or the lower die 24 to form burrs.

Thus, even when there is a variation among the individual amounts of the preform 10, the optical element 40 can be produced that do not cause any defects of material importance in optical accuracy.

Further, according to this embodiment, even when preform 10 is disposed slightly out of alignment with the substantial center of the molding surfaces of the upper die 22 and the lower die 24, the element body 42 having optical surfaces and the rim portions 46 for positioning the optical surfaces can be formed with precision.

Now, let us assume that the preform 10 is disposed with its center out of alignment by ΔX rightward with respect to the center of the upper die 22 and the lower die 24 as illustrated in Fig. 8A.

As in the cases free from misalignment, the preform 10 is heated by a heater, not shown, incorporated in the molding device 20 until the preform 10 becomes deformable, whereupon the preform 10 undergoes compression molding by the upper die 22 and the lower die 24.

As in the above embodiment, the preform 10 abuts on the molding surfaces of the upper die 22 and the lower die 24 and is deformed so that optical surfaces of the element body 42 are formed, whereas as illustrated in Fig. 8B, the preform 10 expands toward the barrel die 26 as the portions containing the vertices, which are closer to the barrel die 26, first abut on the inner surface of the barrel die 26 to form the three abutment portions 17.

Finally, the optical element 40 is formed as illustrated in Fig. 8C.

The optical element 40 comprises the flange 44 provided with the three rim portions 46, and the flange 44 and the three rim portions 46 serve to position the element body 42, which permits no misalignment of the reference surface and ensures that the optical accuracy achieved is free from the effects of misalignment of the preform.

Although the preform 10 shown in the above embodiment has the shape of a triangular prism having a triangular appearance as seen from the direction of compression, the preform 10 is not limited this way and may have any other shape as appropriate.

For example, the external shape as seen from the direction of compression may be a quadrangle, a rhombus, any of polygons including a pentagon, an ellipse, or a shape of a circle from which a pair of arc-shaped segments facing away from each other are cut off (a cut-off shape).

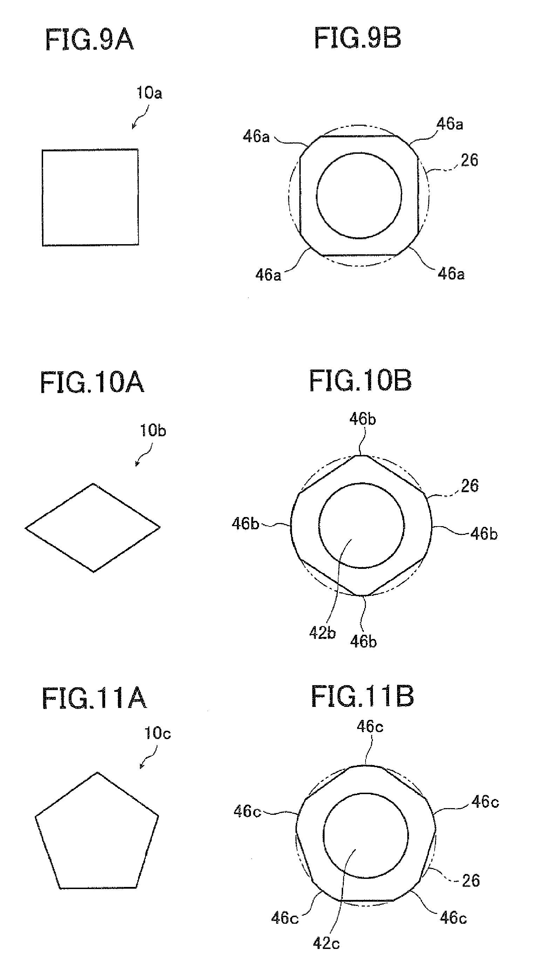

When a preform 10a has a quadrangular appearance as seen from the direction of compression as illustrated in Fig. 9A, four vertex portions abut on the barrel die 26 to form their respective rim portions 46a as illustrated in Fig. 9B. When a preform 10b has a rhombic appearance as seen from the direction of compression as illustrated in Fig. 10A, four vertex portions may abut on the barrel die 26 to form their respective rim portions 46b as illustrated in Fig. 10B, or the two vertex portions on the longer diagonal line may abut on the barrel die 26 to form two rim portions 46 substantially symmetrical with respect to the center of the element body 42b.

When a preform 10c has a pentagonal appearance as illustrated in Fig. 11A, five vertex portions abut on the barrel die 26 to form their respective rim portions 46c as illustrated in Fig. 11B. Needless to say, all the five vertex portions need not necessarily abut on the barrel die 26, provided that a plurality of rim portions 46c are formed to secure the element body 42c in such a manner as to permit no misalignment of the reference positioning surface.

The same applies to the preform having not only a pentagonal shape but any other polygonal shape as seen from the direction of compression.

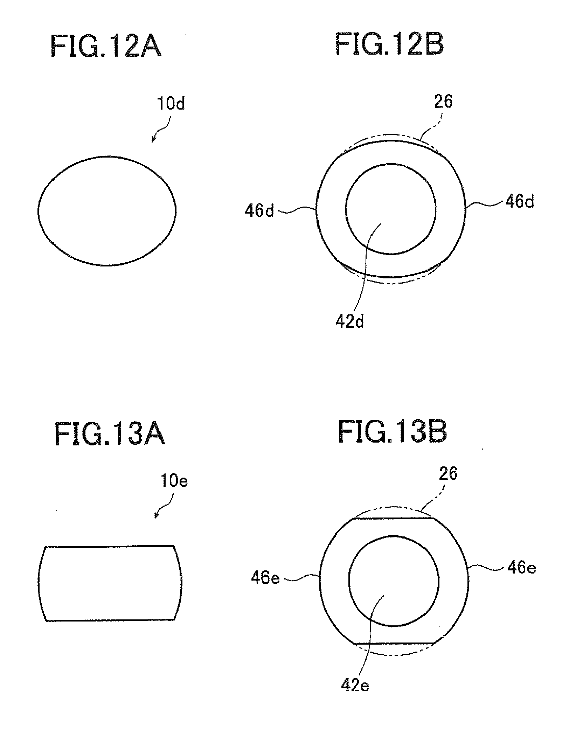

Further, when a preform 10d has an ellipsoidal appearance as seen from the direction of compression as illustrated in Fig. 12A, two portions substantially symmetrical with respect to the center of the element body 42d abut on the barrel die 26 to form their respective rim portions 46d as illustrated in Fig. 12B.

Further, when a preform 10e has a cut-off shape as seen from the direction of compression as illustrated in Fig. 13A, two portions substantially symmetrical with respect to the center of the element body 42e abut on the barrel die 26 to form their respective rim portions 46e as illustrated in Fig. 13B.

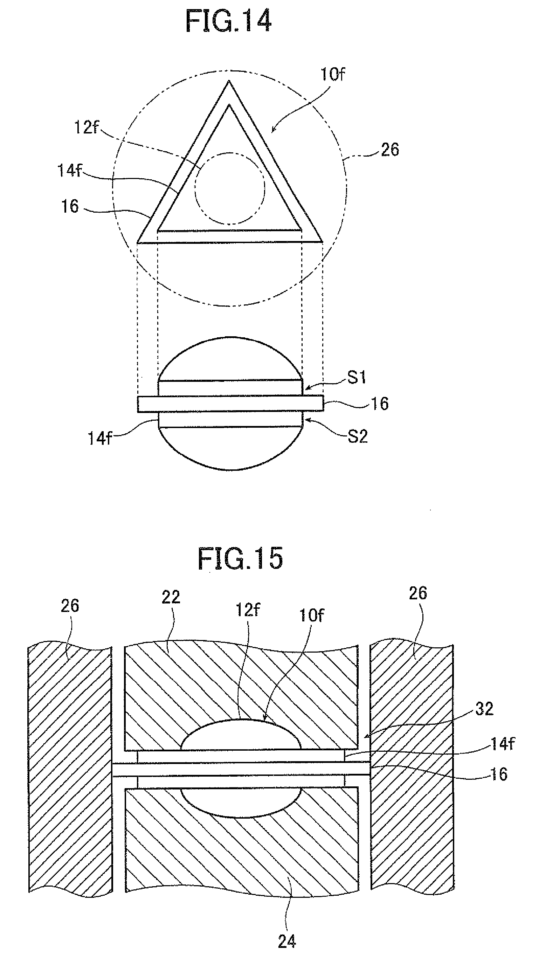

Further, as illustrated in Fig. 14, a preform 10f may comprise a flange forming portion 14f on the periphery of an element body 12f and a rim forming portion 16 having a smaller thickness than the flange forming portion 14f and forming annular steps S1 and S2 on both sides, the top and bottom sides, of the periphery of the flange forming portion 14f.

As illustrated in Fig. 15, when the preform 10f is heated and deformed, the rim forming portion 16 approaches the barrel die 26 substantially without changing its thickness as the flange forming portion 14f expands. Because the annular steps S1 and S2 are provided on both sides, the top and bottom sides, of the flange forming portion 14f, the rim forming portion 16 abuts on the barrel die 26 maintaining the steps S1 and S2 and without abutting on the molding surfaces of the upper die 22 and the lower die 24.

Since the rim forming portion 16 forms the abutment portions for abutting the barrel die 26 while maintaining the steps S1 and S2, it is made possible to manufacture a high-quality optical element free from burrs whose optical surface can be properly positioned and which has a consistent thickness even when the amount of the preform 10 significantly varies.

Next, the method of manufacturing the preform for molding an optical element will be described.

The method of manufacturing the preform for molding an optical element is broadly divided into two methods, one using a sheet or a tape from which the preform is cut out, and the other using injection molding.

When the preform is obtained by cutting a sheet or the like, the shapes such as a triangle, a quadrangle and a rhombus illustrated in Figs. 1, 9A and 10A in particular permit easy manufacture and a good material yield because those shapes allow a design whereby individual pieces of the preform can be arranged without gaps between each other, so that the amount of residue after cutting can be held to a minimum.

When the preform has an ellipsoidal shape or a cut-off shape, the preform can be fabricated by punching a sheet or the like.

When it is desired to provide a convex or concave shape on the top and bottom faces of the preform as with the preform 10 illustrated in Fig. 1, a sheet or the like may be shaped by pattern transfer and cut or punched.

The preform may also be fabricated by injection molding or injection compression molding.

While the element body forming portion 12 and the flange forming portion 14 of the preform 10 illustrated in Fig. 1 has convex top and bottom faces, the top and bottom faces are not limited this way and may be flat, concave or of any other shape as appropriate according to the optical element desired.

When the molding surfaces have a concave portion, the preform preferably has a convex surface with a radius of curvature smaller than that of the concave portion of the molding surfaces. When the molding surfaces have a convex portion, the preform preferably has a concave surface with a radius of curvature greater than that of the convex portion of the molding surfaces. And when the molding surfaces have a flat portion, it is preferable that the preform has a flat portion smaller in area than the flat portion of the molding surfaces and that sufficiently large steps are provided. Thus, air trapping between the molding surfaces and the preform can be prevented and an optical element having a higher quality can be manufactured.

## Claims

1. A preform (10, 10a, 10b, 10c, 10d, 10e, 10f) for molding an optical element, the preform being disposed inside a space (30) enclosed by an upper die (22), a lower die (24), and a barrel die (26) and formed into an optical element (40) through heating and compressing, the preform comprising:
an element body forming portion (12) for forming an element body (42) including optical surfaces; and
a flange forming portion (14) provided in a periphery of the element body forming portion,
**CHARACTERIZED IN THAT**
when the preform (10, 10a, 10b, 10c, 10d, 10e, 10f) is deformed through heating and compressing, an outer periphery of the flange forming portion (14) is formed to have abutment portions (17) that abut on the inner surface of the barrel die (26) and non-abutment portions (18) that do not abut on the inner surface of the barrel die (26).

2. The preform (10) for molding an optical element according to Claim 1, wherein when the preform is disposed in the space, the flange forming portion (14) has a substantially triangular shape as seen from a direction of compression.

3. The preform (10a, 10b) for molding an optical element according to Claim 1, wherein when the preform is disposed in the space, the flange forming portion has a substantially quadrangular shape as seen from a direction of compression.

4. The preform (10b) for molding an optical element according to Claim 3, wherein the quadrangular shape is a substantially rhombic shape.

5. The preform (10c) for molding an optical element according to Claim 1, wherein when the preform is disposed in the space, the flange forming portion has a substantially polygonal shape having five or more angles as seen from a direction of compression.

6. The preform (10d) for molding an optical element according to Claim 1, wherein when the preform is disposed in the space, the flange forming portion has a substantially ellipsoidal shape as seen from a direction of compression.

7. The preform (10e) for molding an optical element according to Claim 1, wherein when the preform is disposed in the space, the flange forming portion has a shape of a circle from which a pair of arc-shaped segments facing away from each other are cut off as seen from a direction of compression.

8. The preform (10f) for molding an optical element according to any one of Claims 1 to 7, wherein
the flange forming portion (14f) includes an annular rim forming portion (16) disposed on a periphery of the flange forming portion and having a smaller thickness than the flange forming portion with forming annular steps (S1, S2) on both sides, a top side and a bottom side, of the periphery of the flange forming portion, and
when the preform is deformed through heating and compressing, a periphery of the annular rim forming portion (16) abuts on the inner surface of the barrel die (26) while maintaining the steps (S1, S2) at the abutment portions.

9. A method of molding an optical element, comprising the steps of:
disposing the preform (10, 10a, 10b, 10c, 10d, 10e, 10f) for molding an optical element described in any one of Claims 1 to 8 in a space (30) enclosed by an upper die (22), a lower die (24), and a barrel die (26); and
deforming the preform for molding an optical element (40) through heating and compressing so that a periphery of the flange forming portion (14) has abutment portions (17) that abut on the inner surface of the barrel die (26) and non-abutment portions (18) that do not abut on the inner surface of the barrel die (26).
